# EUROPÄISCHE PATENTANMELDUNG

(11) **EP 3 276 240 A1**
(43) Veröffentlichungstag der Anmeldung: **31.01.2018**
(21) Anmeldenummer: 17183242.1
(22) Anmeldetag: 26.07.2017
(51) Int. Cl.: F16L 37/20, G06K 19/04

(54) **KUPPLUNGSBAHNHOF EINES PNEUMATISCHEN FÖRDERSYSTEMS**

(30) Priorität: 28.07.2016 DE 202016104141 U
(71) Anmelder: pal plast GmbH, 63165 Mühlheim am Main (DE)
(72) Erfinder: Wirnik, Amit, 63165 Mühlheim am Main (DE)
(74) Vertreter: Heinze, Ekkehard

(57) **Zusammenfassung**

Kupplungsbahnhof (1) eines pneumatischen Fördersystems für schüttfähiges Material, der eine reguläre Anordnung einer Mehrzahl von jeweiligen Enden ankommender und abgehender Rohre (5) mit mindestens teilweise lösbaren Rohrkupplungen (7), Rohrbögen (5b) und Abzweigstücken (5c) in einem Verteilgestell (3) umfasst, wobei mindestens einem Teil der lösbaren Rohrkupplungen (7) zwischen den Enden ankommender und abgehender Rohre Kennzeichnungsmittel zur Kennzeichnung eines der miteinander gekuppelten Rohre zugeordnet sind, wobei die Kennzeichnungsmittel ein RFID-Tag am Ende des beweglichen ersten der gekuppelten Rohre und einen RFID-Leser am Ende des festen zweiten Rohres aufweisen.

## Beschreibung

Die Erfindung betrifft einen Kupplungsbahnhof eines pneumatischen Fördersystems für schüttfähiges Material, der eine reguläre Anordnung einer Mehrzahl von jeweiligen Enden ankommender und abgehender Rohre mit mindestens teilweise lösbaren Rohrkupplungen, Rohrbögen und Abzweigstücken in einem Verteilgestell umfasst, wobei mindestens einem Teil der lösbaren Rohrkupplungen zwischen den Enden ankommender und abgehender Rohre Kennzeichnungsmittel zur Kennzeichnung eines der miteinander gekuppelten Rohre zugeordnet sind.

Derartige Schüttgut-Verteilerstellen, auch bezeichnet als "Kupplungsbahnhof', sind bekannt und in entsprechenden Fördersystemen im praktischen Einsatz; vgl. etwa den Firmenprospekt "Edelstahl-Rohrbogen..." der hs-Umformtechnik GmbH, D 97947 Grünsfeld-Paimar, Februar 2013.

Da mit solchen Kupplungsbahnhöfen variable Verbindungen innerhalb des Fördersystems, also beispielsweise zwischen Materialspeichern und Verarbeitungsmaschinen für gespeicherte Materialien, hergestellt werden können, ist es von Bedeutung, die einzelnen Rohranschlüsse eindeutig zu kennzeichnen. Hierbei ist es bekannt, in einer auch in anderen technischen Konstellationen üblichen Weise die Rohrenden mit farbigen Markierungen zu versehen.

Der Erfindung liegt die Aufgabe zu Grunde, einen Kupplungsbahnhof mit einer verbesserten und insbesondere auch elektronisch auswertbaren, insbesondere zur Erzeugung von Alarmsignalen verwertbaren, Kennzeichnung der ankommenden und abgehenden Rohre anzugeben.

Diese Aufgabe wird durch einen Kupplungsbahnhof mit den Merkmalen des Anspruchs 1 gelöst. Zweckmäßige Fortbildungen des Erfindungsgedankens sind Gegenstand der abhängigen Ansprüche.

Die Erfindung schließt den Gedanken ein, zur Kennzeichnung der miteinander gekuppelten Rohre RFID-Tags einzusetzen, die kommerziell kostengünstig und in für die Anwendungsaufgabe passenden Konfigurationen verfügbar sind. Sie schließt weiterhin den Gedanken ein, jedem Paar ankommender und abgehender Rohre bzw. Rohrabschnitte jeweils ein RFID-Tag und einen hierauf angepassten, einfachst möglich konfigurierten RFID-Leser zuzuordnen.

In einer Ausführung der Erfindung ist der RFID-Leser ein leitungsgebundener Schreib-/Lesekopf. Alternativ hierzu kann der RFID-Leser ein drahtloser Schreib-/Lesekopf sein.

In einer speziellen Einsatz-Konfiguration sind das RFID-Tag in einem ersten Rohrkupplungs-Aufsatz und der RFID-Leser in einem zweiten Rohrkupplungs-Aufsatz untergebracht. Hierbei sind der erste und zweite Rohrkupplungs-Aufsatz dazu ausgebildet, den RFID-Leser mit dem RFID-Tag in eine optimale Leseposition auszurichten. Damit ist eine sichere Funktionsweise der Kennzeichnungsmittel auch unter rauen Einsatzbedingungen und in einer stark störungsbehafteten Umgebung gewährleistet.

In einer Ausgestaltung dieser Ausführung sind der erste und zweite Rohrkupplungs-Aufsatz derart mit den Teilen der Rohrkupplung verbunden, dass sich eine Ausrichtung des RFID-Lesers mit dem RFID-Tag nur im korrekt geschlossenen Zustand der Rohrkupplung herstellen lässt. Hierdurch lässt sich neben der eigentlichen Funktion der Kennzeichnung des entsprechenden Rohrs oder Rohrabschnittes auch eine Alarmfunktion bei nicht richtig geschlossener Rohrkupplung realisieren.

In einer weiteren Ausgestaltung der erwähnten Ausführung weisen der erste und zweite Rohrkupplungs-Aufsatz Rastmittel zum Verrasten beider im ausgerichteten Zustand auf. Hierdurch wird eine selbsttätige optimale Ausrichtung zwischen dem ersten und zweiten Rohrkupplungs-Aufsatz und somit zwischen dem RFID-Tag und dem RFID-Leser realisiert, welche sich auch durch übliche mechanische Beeinflussungen, wie Schwingungen, leichte Stöße etc., nicht beeinträchtigen lässt.

In einer weiteren Ausgestaltung ist vorgesehen, dass der zweite Rohrkupplungs-Aufsatz (also der den RFID-Leser aufnehmende Aufsatz) ein zylindrisches Gehäuse mit Innengewinde zum Einschrauben eines im Wesentlichen ebenfalls zylindrischen Schreib-/Lesekopfes aufweist.

In einer weiteren Ausführung ist vorgesehen, dass der RFID-Leser Anzeigemittel zur Anzeige des Funktionszustandes der Kennzeichnungsmittel, insbesondere des Empfangs einer RFID-Kennung, aufweist. Hierdurch lässt sich auch unmittelbar vor Ort - also unabhängig von der erwünschten elektronischen Auswertung - durch einen Bediener die durch den RFID-Leser gelieferte Kennzeichnungs-Information und somit die Korrektheit der Rohr-Zuordnung überprüfen.

Eine Ausgestaltung dieser Option sieht vor, dass die Anzeigemittel zugleich den korrekt geschlossenen Zustand der Rohrkupplung anzeigen. In einer weiteren Ausgestaltung weisen die Anzeigemittel eine, insbesondere wahlweise blinkende, LED-Anzeige auf. Die Option eines Umschaltens zwischen Dauer- und blinkender Anzeige oder auch zwischen zwei verschiedenfarbigen LED-Anzeigen (etwa rot/grün) kann die Aussagekraft und leichte Wahrnehmbarkeit der Vor-Ort-Anzeigen weiter verbessern.

In einer weiteren Ausgestaltung ist der oder jeder RFID-Leser ein Mehrprotokoll-Schreib-/Lesekopf.

In einer aus Sicht der Anmelderin besonders wichtigen Applikation ist der Kupplungsbahnhof ausgebildet als Teil eines Materialfördersystems der Kunststoffindustrie, insbesondere ausgebildet zum Verteilen von Kunststoffpulver, -granulat oder -schnipseln und /oder -compound.

Vorteile und Zweckmäßigkeiten der Erfindung ergeben sich im Übrigen aus der nachfolgenden skizzenhaften Beschreibung eines Ausführungsbeispiels anhand der Figuren. Von diesen zeigen:

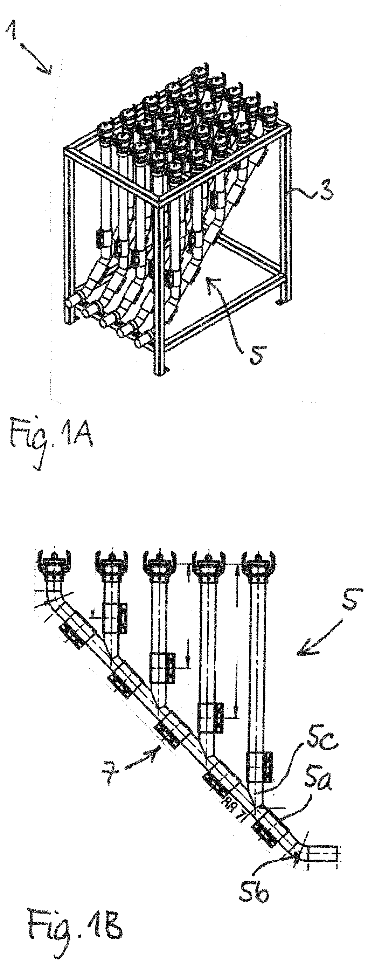

Fig. 1A und 1B eine perspektivische Gesamtansicht bzw. eine Detailansicht eines Kupplungsbahnhofs, und

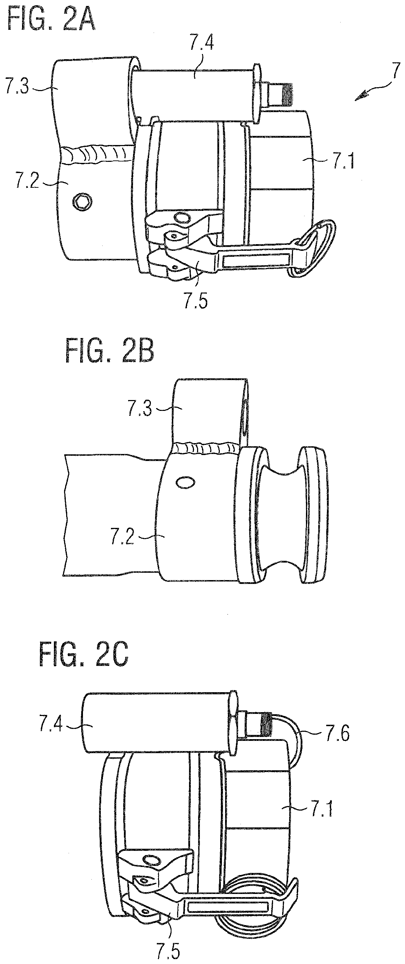

Fig. 2A bis 2C eine Rohrkupplung 7 des Kupplungsbahnhofs nach Fig. 1A und 1B sowie deren Vater- und Mutterteil.

Der Kupplungsbahnhof 1 umfasst in einem quaderförmigen Verteilgestell 3 eine Vielzahl von ankommenden und abgehenden Rohren 5 für schüttfähiges Material, die in zueinander parallelen Ebenen, welche parallel zu den kurzen Seitenflächen des Verteilgestells 3 sind, verlaufen und jeweils mehrere Rohrverbinder 5a, Rohrbögen 5b und Abzweigstücke 5c aufweisen. Weiterhin ist im Verteilgestell üblicherweise ein (nicht gezeigter) Elektrik-/Elektronik-Steuerschrank aufgehängt. Zwischen verschiedenen Stücken des Rohrsystems ist jeweils eine Rohrkupplung 7 vorgesehen.

Speziell die Rohrkupplungen an den Abzweigstücken 5c sind mit Kennzeichnungsmitteln der weiter oben grundsätzlich erläuterten Art und Funktion bestückt. In der nachfolgend beschriebenen Ausführung umfassen diese Kennzeichnungsmittel jeweils ein Paar aus einem RFID-Tag und einem leitungsgebundenen RFID-Leser, der die gelesene Kennzeichnung über eine Leitungsverbindung an eine Auswertungseinheit und eine dort vorgesehene Anzeige weiter gibt. Die Signaverbindung zur Auswertungseinheit kann aber auch drahtlos sein, und zusätzlich zu einer zentralen Anzeige können an den mit Kennzeichnungsmitteln versehenen Rohrkupplungen unmittelbar Anzeigemittel vorgesehen sein.

Diese Rohrkupplungen 7 umfassen jeweils ein Mutterteil oder weibliches Teil 7.1 und ein Vaterteil oder männliches Teil 7.2 sowie einen am Mutterteil angebrachten und zum Verbinden beider Teile ausgebildeten Schnappverschluss 7.5. Am Vaterteil ist ein im Querschnitt U-förmiger Fortsatz 2.3 zur Aufnahme eines RFID-Tags angeschweißt, und am Mutterteil ist ein in den Fortsatz 7.3 passendes zylindrisches Gehäuse 7.4 zur Aufnahme eines RFID-Schreib- und Lesekopfes mit Leitungsverbindung 7.6 angebracht. Das RFID-Tag und der zugehörige Schreib-/Lesekopf sind in den Figuren selbst nicht zu sehen; sie sind als kommerziell verfügbare Standardkomponenten ausgebildet.

Hinsichtlich spezieller Eigenschaften der RFID-Komponenten sowie der entsprechenden Komponenten der Rohrkupplungen wird im Übrigen auf die Erläuterungen im Allgemeinen Beschreibungsteil verwiesen.

Im Übrigen ist die Ausführung der Erfindung auch in einer Vielzahl von Abwandlungen der hier gezeigten Beispiele und weiter oben hervorgehobenen Aspekte der Erfindung möglich.

## Patentansprüche

1. Kupplungsbahnhof eines pneumatischen Fördersystems für schüttfähiges Material, der eine reguläre Anordnung einer Mehrzahl von jeweiligen Enden ankommender und abgehender Rohre mit mindestens teilweise lösbaren Rohrkupplungen, Rohrbögen und Abzweigstücken in einem Verteilgestell umfasst, wobei mindestens einem Teil der lösbaren Rohrkupplungen zwischen den Enden ankommender und abgehender Rohre Kennzeichnungsmittel zur Kennzeichnung eines der miteinander gekuppelten Rohre zugeordnet sind, wobei die Kennzeichnungsmittel ein RFID-Tag am Ende des beweglichen ersten der gekuppelten Rohre und einen RFID-Leser am Ende des festen zweiten Rohres aufweisen.

2. Kupplungsbahnhof nach Anspruch 1, wobei der RFID-Leser ein leitungsgebundener Schreib-/Lesekopf ist.

3. Kupplungsbahnhof nach Anspruch 1, wobei der RFID-Leser ein drahtloser Schreib-/Lesekopf ist.

4. Kupplungsbahnhof nach einem der vorangehenden Ansprüche, wobei das RFID-Tag in einem ersten Rohrkupplungs-Aufsatz und der RFID-Leser in einem zweiten Rohrkupplungs-Aufsatz untergebracht sind, wobei der erste und zweite Rohrkupplungs-Aufsatz dazu ausgebildet sind, den RFID-Leser mit dem RFID-Tag in eine optimale Leseposition auszurichten.

5. Kupplungsbahnhof nach Anspruch 4, wobei der erste und zweite Rohrkupplungs-Aufsatz derart mit den Teilen der Rohrkupplung verbunden sind, dass sich eine Ausrichtung des RFID-Lesers mit dem RFID-Tag nur im korrekt geschlossenen Zustand der Rohrkupplung herstellen lässt.

6. Kupplungsbahnhof nach Anspruch 4 oder 5, wobei der erste und zweite Rohrkupplungs-Aufsatz Rastmittel zum Verrasten beider im ausgerichteten Zustand aufweisen.

7. Kupplungsbahnhof nach einem der Ansprüche 4 bis 6, wobei der zweite Rohrkupplungs-Aufsatz ein zylindrisches Gehäuse mit Innengewinde zum Einschrauben eines im Wesentlichen ebenfalls zylindrischen Schreib-/Lesekopfes aufweist.

8. Kupplungsbahnhof nach einem der vorangehenden Ansprüche, wobei der RFID-Leser Anzeigemittel zur Anzeige des Funktionszustandes der Kennzeichnungsmittel, insbesondere des Empfangs einer RFID-Kennung, aufweist.

9. Kupplungsbahnhof nach Anspruch 8 und einem der Ansprüche 5 - 7, wobei die Anzeigemittel zugleich den korrekt geschlossenen Zustand der Rohrkupplung anzeigen.

10. Kupplungsbahnhof nach Anspruch 8 oder 9, wobei die Anzeigemittel eine, insbesondere blinkende, LED-Anzeige aufweisen.

11. Kupplungsbahnhof nach einem der vorangehenden Ansprüche, wobei der oder jeder RFID-Leser ein Mehrprotokoll-Schreib-/Lesekopf ist.

12. Kupplungsbahnhof nach einem der vorangehenden Ansprüche, ausgebildet als Teil eines Materialfördersystems der Kunststoffindustrie, insbesondere ausgebildet zum Verteilen von Kunststoffpulver, -granulat oder - schnipseln und /oder -compound.
